# EUROPÄISCHE PATENTSCHRIFT

(11) **EP 1 589 636 B1**
(45) Veröffentlichungstag und Bekanntmachung des Hinweises auf die Patenterteilung: **24.10.2007**
(21) Anmeldenummer: 05008393.0
(22) Anmeldetag: 18.04.2005
(51) Int. Cl.: H02K 3/12, H02K 3/38, H02K 15/10

(54) **Elektromotor und Verfahren zur Verschaltung eines Elektromotors**
Electric motor and method of forming winding connections of said motor
Moteur électrique et procédé d'interconnexion dudit moteur

(30) Priorität: 20.04.2004 DE 102004019735
(43) Veröffentlichungstag der Anmeldung: 26.10.2005
(73) Patentinhaber: Döll, Helmut, 97753 Karlstadt-Gambach (DE)
(72) Erfinder: Döll, Helmut, 97753 Karlstadt-Gambach (DE)
(74) Vertreter: Tappe, Hartmut

(56) Entgegenhaltungen:
- DE-A1- 10 116 831
- DE-A1- 19 544 830
- DE-A1- 19 914 942
- DE-A1- 19 924 325
- GB-A- 417 619
- PATENT ABSTRACTS OF JAPAN Bd. 018, Nr. 617 (E-1634), 24. November 1994 (1994-11-24) -& JP 06 233483 A (HONDA MOTOR CO LTD), 19. August 1994 (1994-08-19)

## Beschreibung

Die Erfindung betrifft einen Elektromotor mit einem Stator, welcher zumindest zwei Wickelspulen aufweist, wobei die Wickelspulen auf einem Trägerelement angeordnet sind, und wobei jede Wickelspule zumindest einen elektrischen Anschlussleiter aufweist.

Weiterhin betrifft die Erfindung ein Verfahren zur Verschaltung eines Elektromotors.

Elektromotoren bzw. Statoren kleiner Leistung werden in großer Zahl beispielsweise in Handwerkzeugmaschinen, in Haushaltsgeräten und in Stellantrieben, insbesondere in Stellantrieben von Kraftfahrzeugen, eingesetzt, die in Bezug auf technische und wirtschaftliche Anforderungen möglichst optimal ausgelegt sein sollen. Der Stator hat dabei einen wesentlichen Einfluss auf die Eigenschaften des Motors und die Wirtschaftlichkeit seiner Herstellung.

So sind beispielsweise Statoren für Elektromotoren bekannt, deren Pole maschinell bewickelt werden können. Das äußere Statorteil bildet das magnetische Joch, während das innere Statorteil nach außen offene Nuten aufweist. Auf diese Weise wird es möglich, das innere Statorteil vor der Montage zu bewickeln.

Weiterhin sind aus dem Stand der Technik Statoren für Elektromotoren bekannt, bei denen der Stator ein inneres Statorteil aufweist, das in radialer Richtung angeordnete Pole zur Wicklungsaufnahme aufweist. Die Pole sind auf der Innenseite über Verbindungsstege miteinander verbunden. Die Pole weisen an ihren Außenseiten Wicklungsbegrenzer auf, zwischen denen Einwickelöffnungen vorhanden sind. Auf der Außenseite der Pole ist wenigstens eine Aussparung vorgesehen.

Die GB 417.619 A (Druckschrift 1) beispielsweise bezieht sich auf ein Verfahren zur Ausbildung der Anschlussklemmen für einen Wechselstromgenerator, bei dem die Statorwicklung einschließlich der Anschlussklemmen durchgehend aus konzentrischen Leitern gebildet wird.

Die DE 199 24 325 A1 (Druckschrift 2) offenbart eine Verschaltungsanordnung zum Verschalten von in einer elektrischen Maschine angeordneten Spulen, die Verbindungsleiter umfasst, die isoliert voneinander angeordnet sind und die zumindest über einen Teilbereich einer Erstreckung flächig, eine Ebene bestimmend, ausgebildet sind, wobei mit den Verbindungsleitern zumindest jeweils zugeordnete Spulenenden elektrisch leitend verbunden sind.

Die JP 06233483 (Druckschrift 3) betrifft eine Verbindungsstruktur einer Spulenwicklung in einem Stator. Sie dient dem Zweck der Ermöglichung einer vereinfachten Herstellung und Struktur und Verringerung der Gesamtabmessung einer Verbindungsstruktur einer Spulenwicklung in einem Stator durch Verwendung eines einzigen Leitermaterials von gleicher Gestalt pro Phase für unterschiedliche Phasen (mindestens zwei) und Stapelanordnung eines derartigen Bauteils unter elektrisch isolierenden Bedingungen.

Die DE 199 14 942 A1 (Druckschrift 4) betrifft ein Verfahren zur Herstellung der Statorwicklung von elektrischen Maschinen mit ausgeprägten Statorpolen und Statorwicklung einer elektrischen Maschine, die ausgeprägte Statorpole hat. Spulenleiter ragen dabei mit ihren Enden in axialer Richtung über das Statorblechpaket hinaus und sind in Klemmen von Baugruppen befestigt.

Nachteilig an den aus dem Stand der Technik bekannten Elektromotoren bzw. Statoren ist jedoch, dass die elektrische Isolierung der einzelnen Anschlussleiter der jeweiligen Wickelspulen nur sehr aufwändig bzw. sehr zeitintensiv durchführbar ist. So werden zumeist die einzelnen Anschlussleiter der jeweiligen Wickelspulen, welche einer bestimmten Schaltgruppe zugeordnet sein sollen, jeweils mit dafür geeignetem und farbig unterschiedlich ausgeführtem Installationsmaterial, insbesondere mit Isolationsschlauchmaterial, überzogen, wobei sich auf der Stirnseite des Stators eine sehr große und verwirrende Anzahl von miteinander zu verbindenden Anschlussleitern ergibt.

Ausgehend von diesem Stand der Technik ist es die Aufgabe der vorliegenden Erfindung, einen Elektromotor zu schaffen, bei dem der Stator bzw. die Anschlussleiter der zu verschaltenden und/oder zu verbindenden Wickelspulen mit einem geringen Montageaufwand übersichtlich und dadurch sehr kostengünstig elektrisch isoliert werden können.

Diese Aufgabe wird durch einen Elektromotor nach der Lehre des Patentanspruchs 1 gelöst.

Vorteilhafte Ausgestaltungen der Erfindung sind Gegenstand der Unteransprüche.

Der erfindungsgemäße Elektromotor weist dazu einen Stator auf, wobei an der Stirnseite des Stators zumindest zwei Lagenisolierungen eines Isolatormaterials vorgesehen sind, mit denen zumindest der Verbindungsleiter einer ersten, von zumindest zwei Wickelspulen gebildeten Schaltgruppe, gegenüber einem zweiten Verbindungsleiter einer zweiten, von zumindest zwei Wickelspulen gebildeten Schaltgruppe elektrisch isoliert werden kann. Die Verwendung einer solchen Lagenisolierung an der Stirnseite des Stators hat den Vorteil, dass bei der Isolierung der einzelnen Anschlussleiter der Wickelspulen eine hohe Aufbauhöhe der abzuisolierenden Anschlussleiter vermieden werden kann.

In einer einfachsten Ausführungsform kann dabei jede Schaltgruppe von einer Vielzahl von Wickelspulen gebildet werden, wobei die einzelnen Wickelspulen unter Bildung eines Verbindungsleiters über ihre Anschlussleiter miteinander verbunden sein können.

Nach einem bevorzugten Ausführungsbeispiel kann der Elektromotor eine Vielzahl von Lagenisolierungen aufweisen, welche an der Stirnseite des Stators vorgesehen sind, wobei die einzelnen Lagenisolierungen im Wesentlichen übereinander und/oder aufeinander angeordnet sein können. Dies hat den Vorteil, dass zur Isolierung der einzelnen Schaltgruppen die jeweils miteinander verbundenen Anschlussleiter einer jeden Schaltgruppe mit einer dünnen Lagenisolierung versehen und/oder zugeordnet werden können, wodurch ein sehr flacher Aufbau der Isolierungsschicht an der Stirnseite des Stators erreicht werden kann.

Vorteilhafterweise sind die Lagenisolierungen aus einem spannungsfesten Material hergestellt, insbesondere aus einem in der Art eines spannungsfesten Isolierbands ausgebildeten Material. Die Verwendung eines solchen spannungsfesten Isolierbands kann gewährleisten, dass die Lagenisolierung sehr einfach und kostengünstig hergestellt werden kann.

Erfindungsgemäß ist vorgesehen, dass auf zumindest einer Seite einer Lagenisolierung, bevorzugt jedoch auf der Oberseite der Lagenisolierung, ein Schaltplan aufgedruckt oder aufgeklebt ist. Dies hat den Vorteil, dass anhand eines bestimmten Ausgangsschaltbildes die einzelnen Wickelspulen am Stator einfach und schnell miteinander verbunden werden können, wodurch eine wesentlich einfachere Handhabung zur Verknüpfung der einzelnen Anschlussleiter der jeweiligen Wickelspulen erreicht werden kann.

Eine besonders bevorzugte Ausführungsform sieht vor, dass der Schaltplan, welcheran der Lagenisolierung vorgesehen ist, farbig hinterlegt bzw. farbig ausgeführt sein kann. Somit wäre eine besonders einfache und schnell zu durchschauende Zuordnung der einzelnen zu verbindenden Anschlussleiter anhand der aufgebrachten Struktur möglich.

Dabei ist es denkbar, dass jede der an der Stirnseite des Stators vorgesehenen Lagenisolierungen die komplette Abfolge eines Schaltbilds und/oder eines Schaltplans aufweisen kann. Dies hätte den Vorteil, dass beim Anbringen der einzelnen Lagenisolierungen nicht auf eine bestimmte Reihenfolge bzw. Abfolge der einzelnen miteinander zu verbindenden Wickelspulen geachtet werden müsste.

Erfindungsgemäß stellt jede der an der Stirnseite des Stators vorgesehenen Lagenisolierungen nur jeweils einen nächsten Verschaltungsschritt dar, wobei die einzelnen Lagenisolierungen in einer bestimmten Reihenfolge übereinander angeordnet sind. Diese Ausführungsform hat den Vorteil, dass sich die Struktur der einzelnen Lagenisolierungen als sehr übersichtlich darstellt, wodurch sich eine schnelle und einfachere Verschaltung und/oder Verbindung der einzelnen Anschlussleiter der jeweiligen Wickelspulen ergibt.

Vorteilhafterweise kann an der Lagenisolierung eine Markierung oder Ähnliches vorgesehen sein, mit der die Lagenisolierung einer bestimmten Position an der Stirnseite des Stators zugeordnet werden kann. Durch eine solche Markierung kann ein besonders schnelles und einfaches Anlegen einer Lagenisolierung am Stator erfolgen.

Eine besonders bevorzugte Ausführungsform sieht vor, dass die Lagenisolierung zumindest einseitig mit einem Haftklebstoff versehen sein kann. Dies hätte den Vorteil, dass die Lagenisolierung nach einmaligem Anlegen am Stator nicht mehr verrutschen kann, wodurch eine sehr einfache Handhabung der Lagenisolierung gewährleistet ist. Es ist natürlich auch denkbar, die Lagenisolierung in einer anderen Art und Weise an der Stirnseite des Stators zu befestigen. In welcher Art und Weise dies geschieht, spielt erfindungsgemäß jedoch keine Rolle.

Bevorzugt kann die Lagenisolierung im Wesentlichen eine kreisrunde Gestalt aufweisen.

Dabei kann der Außendurchmesser der Lagenisolierung im Wesentlichen dem Außendurchmesser der Stirnseite eines Stators entsprechen. Dies hätte den Vorteil, dass die Lagenisolierung nicht störend über den Außendurchmesser des Stators hinausragen würde.

Eine weitere bevorzugte Ausführungsform sieht vor, dass an der Lagenisolierung eine kreisrunde Schwächungslinie vorgesehen sein kann, wobei der Durchmesser der Schwächungslinie zumindest geringfügig kleiner sein kann als der Außendurchmesser der Lagenisolierung. Der Durchmesser der Schwächungslinie kann dabei im Wesentlichen dem Innendurchmesser der Stirnseite eines Stators entsprechen. Der Vorteil einer solchen Schwächungslinie an der Lagenisolierung liegt darin, dass die Lagenisolierung als Ganzes einfacher auf der Stirnseite des Stators angebracht werden kann. Nachdem die Lagenisolierung an der Stirnseite des Stators angebracht wurde, kann der Mittelteil der Lagenisolierung im Bereich der Schwächungslinie zu einer axialen Richtung des Stators hin durchgedrückt werden, wodurch eine im Wesentlichen kreisringförmige Gestalt der Lagenisolierung erreicht werden kann.

Die Schwächungslinie selber kann dabei durch Einschneiden, Einritzen, Einstechen und/oder Perforieren an der Lagenisolierung angebracht werden.

Die Erfindung betrifft ferner ein Verfahren zur Verschaltung eines Elektromotors gemäß Anspruch 14.

Zunächst wird in einem ersten Verfahrensschritt an der Stirnseite des Stators eine erste Lagenisolierung angebracht.

Anschließend wird in einem weiteren Verfahrensschritt die Verschaltung bzw. Verbindung von zumindest zwei Anschlussleitern einer ersten, von zumindest zwei Wickelspulen gebildeten Schaltgruppe unter Bildung eines ersten Verbindungsleiters vorgenommen.

Sodann wird in einem weiteren Verfahrensschritt eine zweite Lagenisolierung an der Stirnseite des Stators angelegt, wobei die zweite Lagenisolierung so angebracht wird, dass sie die erste Lagenisolierung bzw. den Verbindungsleiter im Wesentlichen vollständig überdeckt.

Als nächster Verfahrensschritt ist vorgesehen, eine neuerliche Verschaltung bzw. Verbindung von zumindest zwei Anschlussleitern einer zweiten, von zumindest zwei Wickelspulen gebildeten Schaltgruppe unter Bildung eines zweiten Verbindungsleiters vorzunehmen.

Je nach Anzahl der einzelnen Schaltgruppen bzw. der zu verschaltenden Wickelspulen können die oben genannten Verfahrensschritte beliebig oft wiederholt werden.

Das Verschalten bzw. Verbinden der jeweiligen Anschlussleiter in den vorhergenannten Verfahrensschritten erfolgt unter Verwendung eines auf der Lagenisolierung abgebildeten Schaltplans.

Gemäß einer weiteren bevorzugten Ausführungsform des Verfahrens kann nach Anbringen der Lagenisolierung an der Stirnseite des Stators in den vorangegangenen Verfahrensschritten die Lagenisolierung im Bereich ihrer Schwächungslinie durchstoßen werden, wodurch sich eine im Wesentlichen kreisringförmige Gestalt der Lagenisolierung ergibt.

Im Folgenden wird die Erfindung anhand lediglich Ausführungsbeispiele zeigender Zeichnungen näher erläutert. Es zeigen:
- **Fig. 1**: in schematischer Seitenansicht die Darstellung eines Stators;
- **Fig. 2**: in perspektivischer schematischer Darstellung einen Stator vor Anbringung einer Lagenisolierung;
- **Fig. 3**: in perspektivisch schematischer Darstellung den Stator gemäß **Fig.2** unter Verwendung einer ersten Lagenisolierung;
- **Fig. 4**: in Draufsicht in schematischer Darstellung eine Lagenisolierung;
- **Fig. 5**: in Draufsicht in schematischer Darstellung die Lagenisolierung gemäß **Fig. 4** in einer erweiterten Darstellungsform.

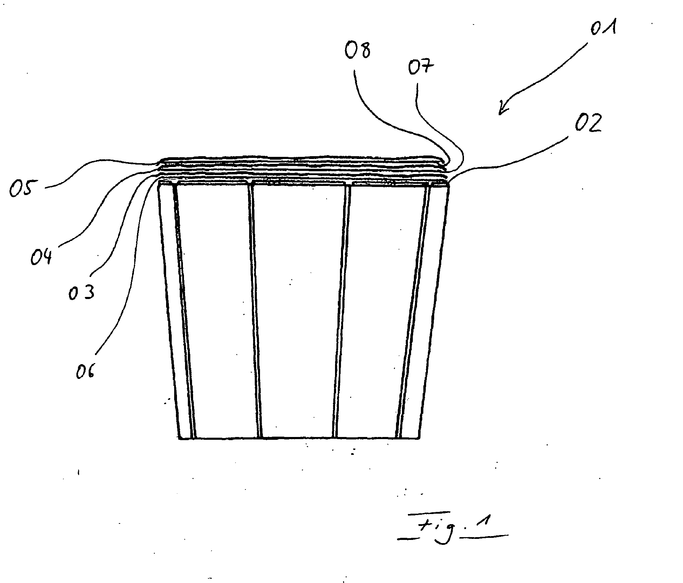

**Fig. 1** zeigt in schematischer Seitenansicht die Darstellung eines Stators 01. Auf der Stirnseite 02 des Stators 01 sind drei übereinander angeordnete Lagenisolierungen 03, 04, 05 zu sehen. Unterhalb der Lagenisolierungen 03, 04, 05 sind die Verbindungsleiter 06, 07, 08 zu erkennen, welche von den Lagenisolierungen 03, 04, 05 im Wesentlichen vollständig überdeckt werden.

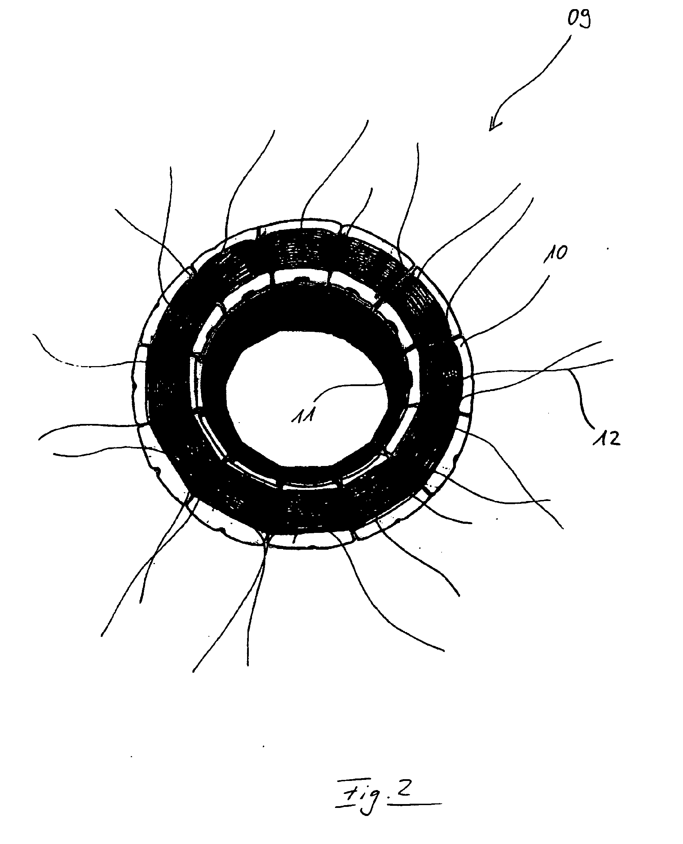

**Fig. 2** zeigt in perspektivisch schematischer Darstellung einen Stator 09, welcher den Zustand des Stators 09 vor Anbringung einer ersten Lagenisolierung darstellt. Der Stator 09 wird hierbei aus einer Gruppierung mehrerer Wickelspulen 10 gebildet, wobei jeder Wickelspule 10 ein Trägerelement 11 zugeordnet ist. Insgesamt weist der hier abgebildete Stator 09 zwölf Wickelspulen 10 sowie zwölf den Wickelspulen 10 zugeordnete Trägerelemente 11 auf. An jeder Wickelspule 10 ragt zumindest ein Anschlussleiter 12 hervor. Mit Hilfe dieser Anschlussleiter 12 können die einzelnen Wickelspulen 10 miteinander verbunden bzw. verschaltet werden.

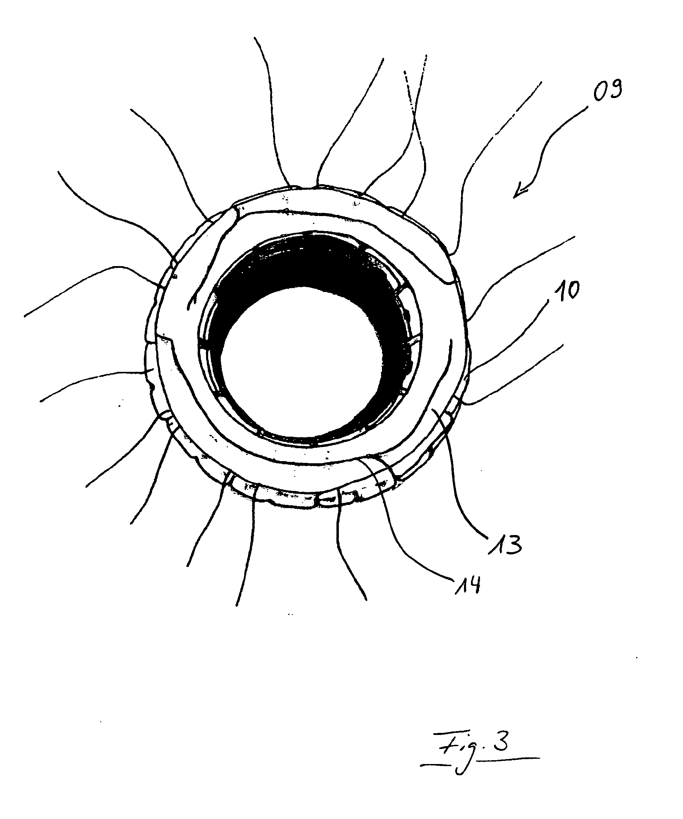

**Fig. 3** zeigt in perspektivisch schematischer Darstellung den Stator 09 gemäß **Fig. 2** unter Anbringung einer ersten Lagenisolierung 13. Die Lagenisolierung 13 überdeckt die Wickeldrähte der Gruppierung der Wickelspulen 10 im Wesentlichen vollständig. Unter Bildung verschiedener Verbindungsleiter 14 sind mehrere Wickelköpfe 10 der Gruppierung über ihre Anschlussleiter miteinander verbunden. Ist die Verschaltung bzw. Verbindung der einzelnen Wickelköpfe miteinander erfolgt, so kann auf der bestehenden Lagenisolierung 13 eine nächste Lagenisolierung angebracht werden. Diese Lagenisolierung überdeckt die Lagenisolierung 13 bzw. die auf der Lagenisolierung 13 verlaufenden Verbindungsleiter 14 nahezu vollständig. Die Verbindungsleiter 14 einer ersten Schaltgruppe können somit durch einfaches Aufbringen einer nächsten Lagenisolierung von einer nächsten zu verschaltenden Schaltgruppe elektrisch isoliert werden. Durch die Verwendung einer solchen Lagenisolierung 13 kann eine sehr geringe Aufbauhöhe im Bereich der Stirnseite des Stators 09 erreicht werden.

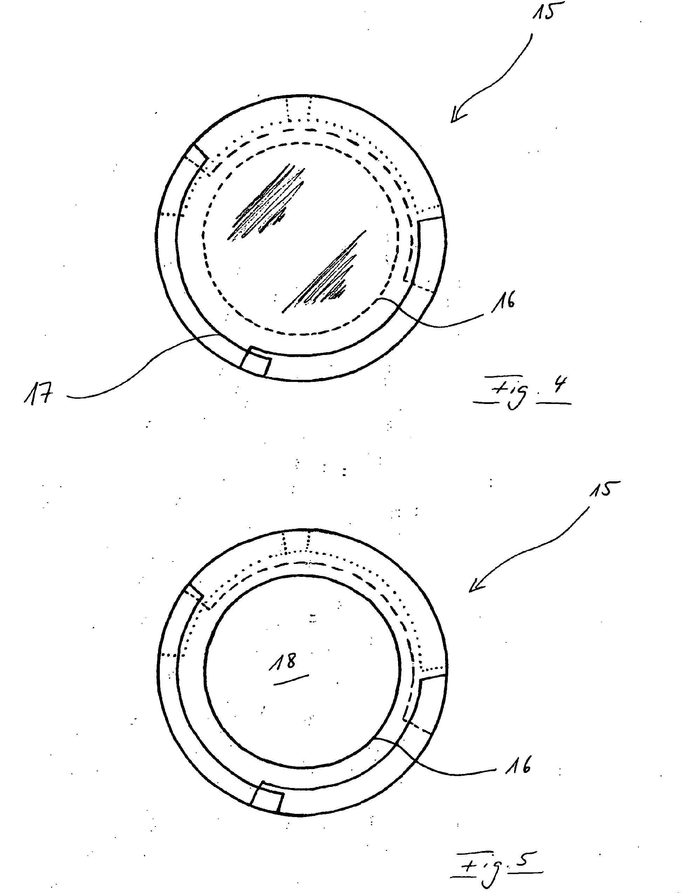

**Fig. 4** zeigt in schematischer Darstellung eine beispielhafte Ausführungsform einer Lagenisolierung 15. Die Lagenisolierung 15 weist im Wesentlichen eine kreisrunde Gestalt auf. Des weiteren ist an der Lagenisolierung 15 eine Schwächungslinie 16 vorgesehen, wobei die Schwächungslinie 16 zumindest geringfügig kleiner ist als der Außendurchmesser der Lagenisolierung 15. Im Wesentlichen entspricht der Durchmesser der Schwächungslinie 16 jedoch dem Innendurchmesser der Stirnseite eines Stators.

Nachdem die Lagenisolierung 15 auf die Stirnseite eines Stators aufgeklebt wurde, kann der innen liegende Mittelteil der Lagenisolierung 15 im Bereich der Schwächungslinie 16 von der Lagenisolierung 15 abgetrennt werden. Dies kann durch einfaches Eindrücken bzw. Durchstoßen des Mittelteils der Lagenisolierung 15 erfolgen. Die Schwächungslinie 16 kann hierbei durch Einschneiden, Einritzen, Einstechen und/oder Perforieren an der Lagenisolierung 15 angebracht worden sein.

Des weiteren ist auf der Lagenisolierung 15 eine Struktur 17 vorgesehen, welche im Wesentlichen die Verbindungslinie bzw. Schaltgruppen der zu verbindenden Wickelköpfe darstellt. Jeder Schaltgruppe ist hierbei eine eigene Verbindungslinie zugeordnet. Die Verbindungslinien sind hierbei in der Art von durchgezogenen, gestrichelten und gepunkteten Linien dargestellt. Es ist natürlich auch denkbar, die Struktur in einer anderen Art und Weise auf der Lagenisolierung vorzusehen bzw. die Struktur in einer anderen Art und Weise auszuführen. In welcher Art und Weise die Ausführungsform einer solchen Struktur jedoch erfolgt, spielt erfindungsgemäß keine Rolle.

**Fig. 5** zeigt die schematische Darstellung der Lagenisolierung 15 gemäß **Fig. 4** in einer erweiterten Darstellungsform. An der Lagenisolierung 15 wurde der Mittelbereich 18 der Lagenisolierung 15 im Bereich der Schwächungslinie 16 von der Lagenisolierung 15 abgetrennt. Dadurch ergibt sich eine mehr oder weniger kreisringförmige Gestalt der Lagenisolierung 15.

## Patentansprüche

1. Elektromotor mit einem Stator (01, 09), welcher zumindest zwei Wickelspulen (10) aufweist, wobei die Wickelspulen (10) auf einem Trägerelement (11) angeordnet sind, und wobei jede Wickelspule (11) zumindest einen elektrischen Anschlussleiter (12) aufweist, und wobei an der Stirnseite (02) des Stators (01, 09) zumindest zwei Lagenisolierungen (03, 04, 05, 13, 15) eines Isolatormaterials vorgesehen sind, mit denen zumindest der Verbindungsleiter (06, 07, 08, 14) einer ersten, von zumindest zwei Wickelspulen (10) gebildeten Schaltgruppe gegenüber einem zweiten Verbindungsleiter (06, 07, 08, 14) einer zweiten, von zumindest zwei Wickelspulen (10) gebildeten Schaltgruppe elektrisch isoliert werden kann,
**dadurch gekennzeichnet,**
**dass** die Lagenisolierungen mit einem bevorzugt auf der Oberseite der Lagenisolierung aufgedruckten oder aufgeklebten Schaltplan versehen sind, dergestalt, dass jede der an der Stirnseite des Stators vorgesehene Lagenisolierung jeweils einen nächsten Verschaltungsschritt darstellt, wobei die einzelnen Lagenisolierungen in einer bestimmten Reihenfolge übereinander angeordnet sind.

2. Elektromotor nach Anspruch 1,
**dadurch gekennzeichnet,**
**dass** jede Schaltgruppe von einer Vielzahl von Wickelspulen (10) gebildet werden kann, wobei die einzelnen Wickelspulen (10) unter Bildung eines Verbindungsleiters (06, 07, 08, 14) über ihre Anschlussleiter (12) miteinander verbunden sind.

3. Elektromotor nach einem der Ansprüche 1 oder 2,
**dadurch gekennzeichnet,**
**dass** die Lagenisolierungen (03, 04, 05, 13, 15) aus einem spannungsfesten Material, insbesondere aus einem in der Art eines spannungsfesten Isolierbands ausgebildeten Material, hergestellt sind.

4. Elektromotor nach einem der Ansprüche 1 bis 3,
**dadurch gekennzeichnet,**
**dass** der Schaltplan farbig hinterlegt bzw. farbig ausgeführt sind.

5. Elektromotor nach einem der Ansprüche 1 bis 4,
**dadurch gekennzeichnet,**
**dass** jede der an der Stirnseite (02) des Stators (01, 09) vorgesehenen Lagenisolierung (03, 04, 05, 13, 15)die komplette Abfolge eines Schaltplans aufweist.

6. Elektromotor nach einem der Ansprüche 1 bis 5,
**dadurch gekennzeichnet,**
**dass** an der Lagenisolierung (03, 04, 05, 13, 15) eine Markierung vorgesehen ist, mit der die Lagenisolierung (03, 04, 05, 13, 15) einer bestimmten Position an der Stirnseite (02) des Stators (01, 09) zugeordnet werden kann.

7. Elektromotor nach Anspruch 6,
**dadurch gekennzeichnet,**
**dass** die Markierung in der Art einer Kerbe und/oder einer Strichmarkierung ausgebildet ist.

8. Elektromotor nach einem der Ansprüche 1 bis 7,
**dadurch gekennzeichnet,**
**dass** die Lagenisolierung (03, 04, 05, 13, 15) zumindest einseitig mit einem Haftklebstoff versehen ist.

9. Elektromotor nach einem der Ansprüche 1 bis 8,
**dadurch gekennzeichnet,**
**dass** die Lagenisolierung (03, 04, 05, 13, 15) eine kreisrunde Gestalt aufweist.

10. Elektromotor nach einem der Ansprüche 1 bis 9,
**dadurch gekennzeichnet,**
**dass** der Außendurchmesser der Lagenisolierung (03, 04, 05, 13, 15) dem Außendurchmesser der Stirnseite (02) eines Stators (01, 09) entspricht.

11. Elektromotor nach einem der Ansprüche 1 bis 10,
**dadurch gekennzeichnet,**
**dass** an der Lagenisolierung (03, 04, 05, 13, 15) eine kreisrunde Schwächungslinie (16) vorgesehen ist, wobei der Durchmesser der Schwächungslinie (16) zumindest geringfügig kleiner ist als der Außendurchmesser der Lagenisolierung (03, 04, 05, 13, 15).

12. Elektromotor nach Anspruch 11,
**dadurch gekennzeichnet,**
**dass** der Durchmesser der Schwächungslinie (16) dem Innendurchmesser der Stirnseite (02) eines Stators (01, 09) entspricht.

13. Elektromotor nach einem der Ansprüche 11 oder 12,
**dadurch gekennzeichnet,**
**dass** die Schwächungslinie (16) durch Einschneiden, Einritzen, Einstechen und/oder Perforieren an der Lagenisolierung (03, 04, 05, 13, 15) angebracht sein kann.

14. Verfahren zur Verschaltung eines Elektromotors unter Verwendung von zumindest zwei an einer Stirnseite des Stators vorgesehenen Lagenisolierungen (03, 04, 05, 13, 15),
**dadurch gekennzeichnet,**
**dass** das Verschalten bzw. Verbinden von zumindest zwei Anschlussleitern (12) unter Verwendung eines auf der Lagenisolierung (03, 04, 05, 13, 15) abgebildeten Schaltplans durchgeführt wird, dergestalt, dass jede der an der Stirnseite des Stators vorgesehene Lagenisolierung einen nächsten Verschaltungsschritt darstellt.

15. Verfahren nach Anspruch 14,
**dadurch gekennzeichnet,**
**dass** nach Anbringen der Lagenisolierung (03, 04, 05, 13, 15) an der Stirnseite (02) des Stators (01, 09) die Lagenisolierung (03, 04, 05, 13, 15) im Bereich ihrer Schwächungslinie (16) durchstoßen wird, wodurch sich eine im Wesentlichen kreisringförmige Gestalt der Lagenisolierung (03, 04, 05, 13, 15) ergibt.

## Claims

1. An electric motor with a stator (01, 09) which has at least two winding spools (10), the winding spools (10) being arranged on a carrier element (11), and each winding spool (11) having at least one electrical terminal lead (12), and at least two layered insulations (03, 04, 05, 13, 15) of an insulation material being provided at the face side (02) of the stator (01, 09), with which layered insulations at least the connection lead (06, 07, 08, 14) of a first switch group, formed by at least two winding spools (10), can be electrically insulated with respect to a second connection lead (06, 07, 08, 14) of a second switch group formed by at least two winding spools (10),
**characterized in that**
the layered insulations are provided with a wiring diagram which is preferably printed or glued on the upper side of the layered insulation, such that each of the layered insulations provided on the face side of the stator respectively constitutes a next connection step, with the individual layered insulations being arranged in a particular sequence one over the other.

2. The electric motor according to Claim 1,
**characterized in that**
each switch group can be formed by a plurality of winding spools (10), the individual winding spools (10) being connected with each other with the formation of a connection lead (06, 07, 08, 14) via their terminal leads (12).

3. The electric motor according to any of Claims 1 or 2,
**characterized in that**
the layered insulations (03, 04, 05, 13, 15) are produced from a voltage-proof material, particularly from a material formed in the manner of a voltage-proof insulating tape.

4. The electric motor according to any of Claims 1 to 3,
**characterized in that**
the wiring diagram is deposited in colour or formed in colour.

5. The electric motor according to any of Claims 1 to 4,
**characterized in that**
each of the layered insulations (03, 04, 05, 13, 15) provided on the face side (02) of the stator (01, 09) has the complete sequence of a wiring diagram.

6. The electric motor according to any of Claims 1 to 5,
**characterized in that**
a marking is provided on the layered insulation (03, 04, 05, 13, 15), by which the layered insulation (03, 04, 05, 13, 15) can be associated with a particular position on the face side (02) of the stator (01, 09).

7. The electric motor according to Claim 6,
**characterized in that**
the marking is formed in the manner of a notch and/or a line marking.

8. The electric motor according to any of Claims 1 to 7,
**characterized in that**
the layered insulation (03, 04, 05, 13, 15) is provided on at least one side with a contact adhesive.

9. The electric motor according to any of Claims 1 to 8,
**characterized in that**
the layered insulation (03, 04, 05, 13, 15) has a circular shape.

10. The electric motor according to any of Claims 1 to 9,
**characterized in that**
the external diameter of the layered insulation (03, 04, 05, 13, 15) corresponds to the external diameter of the face side (02) of a stator (01, 09).

11. The electric motor according to any of Claims 1 to 10,
**characterized in that**
a circular weakened line (16) is provided on the layered insulation (03, 04, 05, 13, 15), the diameter of the weakened line (16) being at least slightly smaller than the external diameter of the layered insulation (03, 04, 05, 13, 15).

12. The electric motor according to Claim 11,
**characterized in that**
the diameter of the weakened line (16) corresponds to the internal diameter of the face side (02) of a stator (01, 09).

13. The electric motor according to any of Claims 11 or 12,
**characterized in that**
the weakened line (16) can be arranged by notching, scratching, recessing and/or perforating on the layered insulation (03, 04, 05, 13, 15).

14. A method for switching an electric motor using at least two layered insulations (03, 04, 05, 13, 15) provided on a face side of the stator,
**characterized in that**
the switching or connecting of at least two terminal leads (12) is carried out using a wiring diagram represented on the layered insulation (03, 04, 05, 13, 15), such that each of the layered insulations provided on the face side of the stator constitutes a next connection step.

15. The method according to Claim 14,
**characterized in that**
after the arranging of the layered insulation (03, 04, 05, 13, 15) on the face side (02) of the stator (01, 09), the layered insulation (03, 04, 05, 13, 15) is pierced in the region of its weakened line (16), whereby a substantially circular ring-shaped form of the layered insulation (03, 04, 05, 13, 15) is produced.

## Revendications

1. Moteur électrique avec un stator (01, 09) qui présente au moins deux bobines d'enroulement (10), pour lequel les bobines d'enroulement (10) sont disposées sur un élément porteur (11) et pour lequel chaque bobine d'enroulement (11) présente au moins un conducteur de connexion électrique (12), et pour lequel sur la face avant (02) du stator (01, 09) au moins deux isolations en couches (03, 04, 05, 13, 15) d'un matériau isolant sont prévues, avec lesquelles au moins le conducteur de liaison (06, 07, 08, 14) d'un premier couplage formé d'au moins deux bobines d'enroulement (10) vis-à-vis d'un deuxième conducteur de liaison (06, 07, 08, 14) d'un deuxième couplage formé d'au moins deux bobines d'enroulement (10) peut être électriquement isolé,
**caractérisé en ce que**
les isolations en couches sont munies d'un plan de connexions imprimé ou collé de préférence sur le côté supérieur de l'isolation en couches de telle manière que chaque isolation en couches prévue sur la face avant du stator représente à chaque fois une phase de câblage suivante pour laquelle les isolations en couches individuelles sont disposées l'une au-dessus de l'autre dans un certain ordre.

2. Moteur électrique selon la revendication 1,
**caractérisé en ce que**
chaque couplage peut être formé d'un grand nombre de bobines d'enroulement (10), pour lequel les bobines d'enroulement (10) individuelles sont raccordées entre elles en formant un conducteur de liaison (06, 07, 08, 14) par leurs conducteurs de connexion (12).

3. Moteur électrique selon l'une des revendications 1 ou 2,
**caractérisé en ce que**
les isolations en couches (03, 04, 05, 13, 15) sont fabriquées dans un matériau résistant à la tension, en particulier dans un matériau constitué du type d'une bande isolante résistante à la tension.

4. Moteur électrique selon l'une des revendications 1 à 3,
**caractérisé en ce que**
le plan de connexion est déposé en couleur ou réalisé en couleur.

5. Moteur électrique selon l'une des revendications 1 à 4,
**caractérisé en ce que**
chacune des isolations en couches (03, 04, 05, 13, 15) prévues sur la face avant (02) du stator (01, 09) présente la suite complète d'un plan de connexion.

6. Moteur électrique selon l'une des revendications 1 à 5,
**caractérisé en ce**
**qu'**un marquage est prévu sur l'isolation en couches (03, 04, 05, 13, 15), avec lequel on peut attribuer l'isolation en couches (03, 04, 05, 13, 15) à une certaine position sur la face avant (02) du stator (01, 09).

7. Moteur électrique selon la revendication 6,
**caractérisé en ce**
**que** le marquage est constitué sous la forme d'une encoche et/ou d'un marquage à trait.

8. Moteur électrique selon l'une des revendications 1 à 7,
**caractérisé en ce que**
l'isolation en couches (03, 04, 05, 13, 15) est munie de colle autoadhésive d'au moins un côté.

9. Moteur électrique selon l'une des revendications 1 à 8,
**caractérisé en ce que**
l'isolation en couches (03, 04, 05, 13, 15) présente une structure circulaire.

10. Moteur électrique selon l'une des revendications 1 à 9,
**caractérisé en ce que**
le diamètre extérieur de l'isolation en couches (03, 04, 05, 13, 15) correspond au diamètre extérieur de la face avant (02) du stator (01, 09).

11. Moteur électrique selon l'une des revendications 1 à 10,
**caractérisé en ce**
**qu'**une ligne d'affaiblissement (16) circulaire est prévue sur l'isolation en couches (03, 04, 05, 13, 15), pour laquelle le diamètre de la ligne d'affaiblissement (16) est au moins légèrement plus petit que le diamètre extérieur de l'isolation en couches (03, 04, 05, 13, 15).

12. Moteur électrique selon la revendication 11,
**caractérisé en ce que**
le diamètre de la ligne d'affaiblissement (16) correspond au diamètre intérieur de la face avant (02) du stator (01, 09).

13. Moteur électrique selon les revendications 11 ou 12,
**caractérisé en ce que**
la ligne d'affaiblissement (16) peut être appliquée à l'isolation en couches (03, 04, 05, 13, 15) par entaillage, rayage, saignée et/ou perforation.

14. Procédé de câblage d'un moteur électrique en utilisant au moins deux isolations en couches (03, 04, 05, 13, 15) prévues sur une face avant du stator,
**caractérisé en ce que**
le câblage ou le raccordement d'au moins deux conducteurs de connexion (12) est effectué en utilisant un plan de connexions reproduit sur l'isolation en couches (03, 04, 05, 13, 15) de telle sorte que chaque isolation en couches prévue sur la face avant du stator présente une phase de câblage suivante.

15. Procédé selon la revendication 14,
**caractérisé en ce**
**qu'**après application de l'isolation en couches (03, 04, 05, 13, 15) sur la face avant (02) du stator (01, 09), l'isolation en couches (03, 04, 05, 13, 15) est percée dans la zone de sa ligne d'affaiblissement (16), ce qui résulte pour l'essentiel en une structure circulaire de l'isolation en couches (03, 04, 05, 13, 15).
